# EUROPEAN PATENT SPECIFICATION

(11) **EP 2 517 431 B1**
(45) Date of publication and mention of the grant of the patent: **20.02.2019**
(21) Application number: 09802144.7
(22) Date of filing: 23.12.2009
(51) Int. Cl.: G06F 21/10, H04L 29/08, H04L 29/06

(54) **USAGE CONTROL OF DIGITAL DATA EXCHANGED BETWEEN TERMINALS OF A TELECOMMUNICATIONS NETWORK**
NUTZUNGSKONTROLLE VON ZWISCHEN ENDGERÄTEN EINES TELEKOMMUNIKATIONSNETZES AUSGETAUSCHEN DIGITALEN DATEN
CONTRÔLE D'UTILISATION DE DONNÉES NUMÉRIQUES ÉCHANGÉES ENTRE DES TERMINAUX D'UN RÉSEAU DE TÉLÉCOMMUNICATION

(43) Date of publication of application: 31.10.2012
(73) Proprietor: Telefonaktiebolaget LM Ericsson (publ), 164 83 Stockholm (SE)
(72) Inventor: CATREIN, Daniel, 52146 Würselen (DE); HARTUNG, Frank, 52134 Herzogenrath (DE); CHENG, Yi, S-172 37 Sundbyberg (SE)
(74) Representative: Ericsson
(86) International application number: PCT/EP2009/067847
(87) International publication number: WO 2011/076274

(56) References cited:
- EP-A1- 1 857 952
- WO-A1-03/098409
- US-A1- 2008 162 641
- YAN LIU: "Protecting Privacy of Personal Content on an OMA DRM Platform" MASTER'S THESIS - TECHNOLOGY UNIVERSITY EINDHOVEN, PHILIPS RESEARCH,, [Online] 1 June 2005 (2005-06-01), pages 1-68, XP002494353 Retrieved from the Internet: URL:http://alexandria.tue.nl/extra1/afstve rsl/wski-i/yanliu2005.pdf> [retrieved on 2008-09-03]
- SILKE HOLTMANNS ET AL: "Privacy Rights Management for Mobile Phones" WIRELESS INFORMATION SYSTEMS. PROCEEDINGS OF THE INTERNATIONALWORKSHOP ON WIRELESS INFORMATION SYSTEMS, XX, XX, 1 April 2004 (2004-04-01), pages 12-17, XP002474382

## Description

### Technical Field

The present invention relates to controlling and managing the access to digital data.

### Background

Devices like personal computers, laptop computers, or mobile phones are developing from specialized devices, e.g. computing devices or telephony devices to so-called multimedia devices that provide a multitude of services. Current mobile phones are available that offer, additionally to traditional telephony services, data services, e.g., Web browsing, Multimedia Messaging Services (MMS), MP3 music playback, video streaming, and/or mobile gaming. Furthermore, with the introduction of integrated camera modules, such devices are capable of generating and managing picture files and/or video files. With the increasing capability of generating and managing own digital data, the wish to exchange such data among devices increases accordingly.

Without an efficient measure of protection, digital data can be extensively used by any recipient, e.g. being copied, modified and/or distributed arbitrarily to further recipients. However, with respect to current discussions on data privacy, users may want to be able to control and limit distribution of digital content by means of user-friendly but reliable techniques. For such protection, so-called Digital Rights Management (DRM) technologies have been created, which refers to protection and usage control of multimedia data.

One of such DRM technologies has been proposed by the Open Mobile Alliance (OMA), a standardization organization in the field of mobile communication that addresses DRM within mobile networks. The Open Mobile Alliance has developed a series of open standards (being available under the web address http://www.openmobilealliance.org), hereunder a standard named "OMA Digital Rights Management V1.0", in the following being referred to as OMA DRM 1.0, and a further standard named "OMA Digital Rights Management V2.0", or recently V2.1, in the following being referred to as OMA DRM 2. These standards focus on the protection of data delivered from content owners and service providers, actually preventing recipient users from an unauthorized use of received content.

OMA DRM 1.0 provides the ability to associate rights to the content data object (e.g. to prevent downloaded content from being forwarded or copied to further users, also being referred to as Forward-Lock). Thereto, patent application PCT/EP2007/010598 of the same applicant proposes a solution to control a usage of digital data on a peer-to-peer (P2P) level that is based on the so-called Separate Delivery Mode, wherein the content object and the associated rights object are separately delivered.

OMA DRM 2 can be regarded as an extension to OMA DRM 1.0, addressing a protection of the exchanged information by means of encryption, enabling content distribution over open channels without the need for additional protection. Access to received data content is subject to the knowledge of a corresponding Content Encryption Key (CEK). The Rights Object (RO) comprises a Content Encryption Key and the usage rights associated to the content. OMA DRM 2 introduces the so-called Rights Object Acquisition Protocol (ROAP) that stands for a suite of security protocols to exchange ROs between a DRM agent within a device and a Rights Issuer (RI) server. It uses asymmetric encryption and certificates to mutually authenticate DRM agent and RI server and to enable secure distribution of ROs. A so-called Online Certificate Status Protocol (OCSP) may be used to assure the validity of the RI certificates towards the DRM agents. Such protocol might be carried out between the RI and a certificate verification server that is also being referred to as OCSP responder. Hence, OMA DRM 2 provides the means to assure that only trusted devices which enforce the usage rights defined in the ROs will get access to the content distributed by trusted servers.

The above-cited standards are defined on top of a client-server architecture with the DRM agent on one side and the DRM server on the other side. The above-cited standards do not address any peer-to-peer mechanism of control, wherein both the control of usage and the usage of content is performed by user devices, or in other words, wherein each user device might act as both a client and a server.

US 2008/162641 discloses a system and a method transmitting protected rights objects directly from one user to another user or from one user to other users via a central server, therewith enabling point-to-point communication of protected content or multiparty communications of protected content respectively.

The master thesis of Yan Liu, titled "Protecting Privacy of Personal Content on an OMD DRM Platform", Technology University Eindhoven, Philips research, 1 June 2005 discloses a client device comprising a content issuer and a rights issuer in addition to a standard DRM agent, such that users can protect their own content and securely share it with other users.

The article "Privacy Rights Management" of Silke Holtmanns and Frank Hartung, Wireless Information Systems, Proceedings of the 3rd International Workshop on Wireless Information Systems, April 2004 discloses a mobile device comprising a privacy rights management module to encapsulate and package user data and to specify usage rights/permission. The content is encrypted by the mobile device itself or by a trusted server, wherein the corresponding decryption key is and the usage rights are combined into a rights object to be used by recipient devices for retrieving the user data.

EP 1857952 discloses a method for securely making digital content available from a mobile device to one or a plurality of other mobile devices.

### Summary

It is an object of the present invention to improve the digital rights management.

This object is achieved by the independent claims. Advantageous embodiments are described in the dependent claims.

According to embodiments of the invention, a usage control of an encrypted digital content is performed by a first user device, in the following also being referred to as sending user device. The digital content might have been generated by the sending user device itself or by any other device. The digital content is then encrypted and packaged into a media or content object to be consumed by any recipient or receiving device. Thereto, the content object is transmitted, either directly or via one or a plurality of network or user devices (e.g. via a storage server that keeps stored one or a plurality of content objects) to a receiving device. The content object is associated to a usage or rights object that enables a user device to consume or use the content object, e.g. to access the digital content of the content object. The rights object might comprise digital information (a decryption key or any information from with the decryption key can be retrieved) that enables a decryption of the encrypted content. In order to enable a receiving user device to use the digital content, the sending user device sends or initiates sending the rights object to the receiving user device.

The sending user device sends the rights object or information associated to the rights object to a rights management server. The rights management server might check this information, e.g. with respect to a fulfillment of formal requirements or any allowance (e.g. a subscription) with respect to the sending user. In case of a positive validation, the rights management server may generate a signature associated to the rights object to be transmitted to the receiving user device together with the rights object.

This embodiment allows a usage control directly by the user terminals. The rights management server is used only for supporting usage control, but the user does not give up any control to this server. This allows any publishers or copyright holders of digital media data to directly and transparently control the usage of this data.
The rights object might further define how the content object should be consumed or in other words it might define usage rights granted to the receiving users. The rights object thereto might comprise a collection of parameters indicative of permissions and/or other attributes associated to the content. Such parameters might be generated on the sending user device and packaged into the rights object.
The digital content of the content object is encrypted by means of a content encryption key (CEK). The digital key comprises the CEK being encrypted by an encryption key, wherein the encryption key is associated to a key of the receiving user device used for decrypting the CEK. According to this embodiment, usage rights and access credentials for the content are solely controlled by the sending user device (content owner). Specifically, the content encryption key CEK is only exposed to the receiving user device and not to any network device. On the other hand, it is not required to assign a rights issuer certificate to the sending user device in order to enable the receiving user device to verify the trustability of the sending user device (guarantied by the signature of the RI 12). Thus a powerful control of digital content can be established between the user terminals without giving up control to network entities, nevertheless being able to providing a high level of trust.

In a further embodiment, the encryption key used for encrypting the CEK at the sending user device and the associated decryption key used by the receiving user device are part of a so-called Public Key Infrastructure (PKI) using an asymmetric key algorithm with a related key pair: a secret private key and a published public key. Use of these keys allows protection of the authenticity of a message by creating a digital signature of a message using the private key, which can be verified using the public key. It also allows protection of the confidentiality and integrity of a message, by public key encryption, that means encrypting the message using the public key, which can only be decrypted using the private key. Accordingly, the encryption key for encrypting the CEK is a public key of the receiving device, and the decryption key associated to this encryption key is a corresponding private key of the receiving user device.

In a further embodiment, the rights object further comprises verification data to be used for verifying the integrity of the rights object, and wherein the digital key further comprises a rights object verification key being encrypted together with the CEK by the encryption key at the sending user device.

In a further embodiment, the sending user device receives from the rights management server a unique resource locator associated to the rights object - called Rights Issuer Uniform Resource Locator (RI-URL) - to be embedded into the content object. This allows the receiving user device to retrieve the RI-URL from the received content object and to request the rights object by using the RI-URL. The content object might have been sent directly from the sending user device to the receiving user device or via a storage server within the network. The content object might have been sent to the receiving user device in response to a corresponding request of the receiving user device, or on initiative of the sending user device.

In a further embodiment, the rights management server packages the rights object and the signature into a data set, also being referred to as RO response. The RO response might additionally comprise further data, e.g. a device ID or any other data e.g. being defined in OMA DRM 2.0, "DRM specification", chapter "5.4.3.2 RO Response".

In a further embodiment, the RO response is sent from the rights management server to the receiving device in response to a request to send the rights object to the receiving user device (RO request). As discussed above, the receiving user device might send the RO request by means of the RI-URL that the receiving user device might have got from the content object. Alternatively, the rights management server might send the RO request to the sending user device that forwards the RO request to the receiving user device.

In a further embodiment, the rights object and the RO response are generated according to the standard OMA DRM 2.

In an embodiment, a rights management server for supporting a sending user device to enforce a usage control of an encrypted digital content is provided. The server comprises a receiver for receiving from the sending device a rights object or data to generate the rights object comprising a digital key to be used for decrypting the encrypted digital content of the content object, and a transmitter for transmitting the rights object to be received by the receiving user device.

The present invention also concerns computer programs comprising portions of software codes in order to implement the method as described above when operated by a respective processing unit of a network server or a user device respectively. The computer program can be stored on a computer readable medium. The computer-readable medium can be a permanent or rewritable memory within the server or the user device or located externally. The respective computer program can be also transferred to the server or device for example via a cable or a wireless link as a sequence of signals.

In the following, detailed embodiments of the present invention shall be described in order to give the skilled person a full and complete understanding. However, these embodiments are illustrative and not intended to be limiting.

### Brief Description of the Figures

- Fig. 1: shows a principle block diagram with exemplary network device, a sending user device and a receiving user device, and an exemplary flow of a content object and a rights object between these devices,
- Fig. 2: shows an exemplary structure of a rights object and a RO-Response and an exemplary decomposition within a receiving user device,
- Fig. 3: shows a first sequence diagram with an exemplary specific message flow for a digital content registration at a digital rights server,
- Fig. 4: shows a second sequence diagram with an exemplary specific message flow for a receiving device registration at the digital rights server,
- Fig. 5: shows a third sequence diagram with an exemplary specific message flow based on a 2-pass rights object acquisition protocol to support user generated content in super-distribution use-cases, and
- Fig. 6: shows a fourth sequence diagram with an alternative exemplary specific message flow based on a 1-pass rights object acquisition protocol.

### Detailed Description

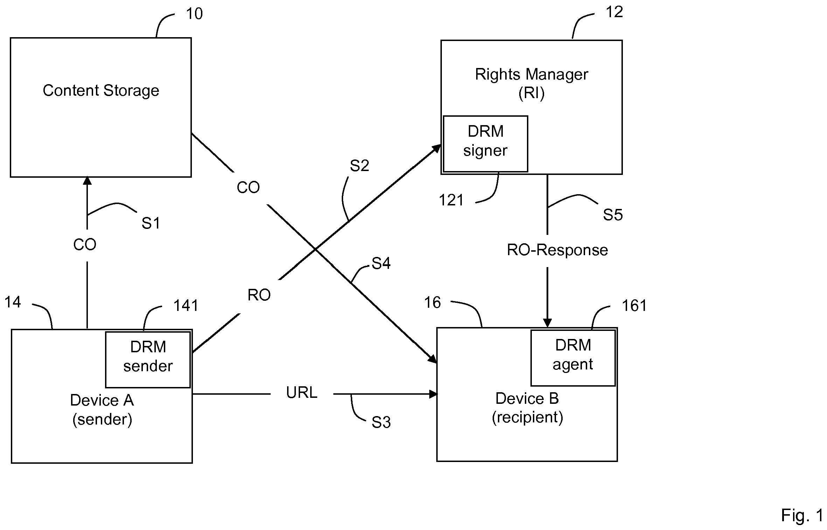

**Fig. 1** depicts an exemplary communications network comprising network devices and devices or terminals that communicate to perform an exchange of digital data between the devices, and control and enforce usage rights for the digital content. In the following, without limiting the scope of the invention, the terminology of OMA DRM 2 will be used.

A content storing server 10, a digital rights management (DRM) server 12, in the following also referred to as (DRM) rights issuer (RI) 12, a sending (user) device or first (user) device 14, and a receiving (user) device or second (user) device 16 are depicted. The DRM server 12 comprises a functional entity or agent responsible for the processing of digital rights management (DRM) at the server side, in the following being referred to as DRM signer 121. The first device 14 comprises a functional entity or agent that is responsible for generating and handling of DRM data, especially a generation of usage control data (e.g. a rights object associated to a content object as being discussed in the following), in the following being referred to as DRM sender 141. The second device comprises a functional entity or agent that is responsible for the reception of DRM data as well as enforcing the usage control according to the usage control data on the receiver side, in the following being referred to as DRM agent 161. It is well understood that one or both devices 14 and 16 might comprise both a DRM sender and a DRM agent in order to act both as a content object (CO) sender and receiver.

A first arrow S1 symbolizes a transmission of a digital content object (CO) from the first device 14 to the content storing server 10. Such transmission might be part of a communication between the first device 14 and the content storing server 10, e.g. being performed according to the so-called hypertext transfer protocol HTTP. It is well known that the HTTP protocol comprises transfer of information in both directions, e.g. comprising request and/or acknowledgement messages.

A second arrow S2 symbolizes a transmission of a digital rights object (RO) or data to generate the RO from the sending device 14 to the RI 12, wherein the RO enables the receiving user device 16 to using the CO, and e.g. comprising parameters indicative of granted rights for using the digital content object CO. As discussed in the following, the RO might be coded in a format of a rights object according to OMA DRM 2.

A third arrow S3 symbolizes an identification or address information associated to the content object for providing the second device 16 with an information to download the content object CO (e.g. from the content server 10 as shown in Fig. 1). Such information might comprise a Uniform Resource Identifier URL that that specifies where an identified resource is available and further identifies the requested content object. Such information might e.g. be sent by means of a short message (SMS) or a multimedia message (MMS).

A fourth arrow S4 symbolizes a transmission of the digital content object CO from the content storing server 10 to the second device 16. Such transmission might be part of an exchange of information between the content storing server 10 and the second device 16. Part of such exchange might be a preceding request from the second device 16 to the content storing server 10; such request comprising the identification information received from the first device 14. Similarly, such information exchange might be performed according to HTTP.

A fifth arrow S5 symbolizes a transmission of a data set RO-response comprising the RO and a signature generated by DRM signer 121 from RI 12 to the second device 16. The RO-response might be sent in response to a corresponding request (RO-request) received from the second user device. The RO-response enables the DRM agent 161 of the receiving device 16 to consume the digital content from the content object CO.

In advance to adding the signature, the RI 12 might validate the RO. Such validation might comprise checking the identity of the user (e.g. whether the user is registered and allowed to disseminate content to the community), or checking the identity of the first device 14. It might further check for the (formal) correctness of the RO. After a positive validation, the RI 12 then transmits the RO-response to the second device 16.

Alternatively to the above described procedure, instead of transmitting the content object CO via the content storage 10 to the second device 16, the content object CO may me transmitted directly from the first device 14 to the second device 16. Accordingly, the communications symbolized by arrows S1 and S4 are replaced by a corresponding direct communication between the first device 14 and the second device 16.

In order to provide a high level of security, the CO is encrypted in such a way that only the receiving user device is able to decrypt and consume the digital content of the CO, or in other words to prevent anybody except the selected receiving user device(s) to use (decrypt) the digital content. Thereto, the first device encrypts the content by means of a content encryption key (CEK), that can be retrieved (only) at the receiving user device 16.

As discussed above, this might be achieved by means of asymmetric keys consisting of a private key and a public key associated to the receiving user device. Therein the sending user device encrypts the CEK with the public key of the receiving device 16 and packages the encrypted CEK together with the digital rights into the RO. At reception of the RO, the second device 16 decrypts the encrypted CEK by means of its private key and further decrypts the content object by means of the decrypted CEK to get the digital content to be used according to the defined digital rights.

In an embodiment, the content is coded into a DRM (OMA DRM 2) content format DCF. Further, the RO and the RO-response are generated according to OMA DRM 2. The RI 12 communicates with the receiving user device 16 according to standard DRM (OMA DRM 2) protocols, also being referred to as ROAP as discussed in the introduction.

This embodiment allows for an easy integration into existing trust models, especially of the trust model established by OMA; it allows using an OMA DRM Rights issuer (RI 12) to sign the prepared RO with the usage rights defined by the sending device (device 14). The above principle integrates seamlessly into the existing OMA DRM (DRM 2) framework, so that any OMA DRM compliant device (comprising the DRM Agent 161) might be a potential recipient of the content.

In a further embodiment, the rights object further comprises verification or integrity data to be used for verifying the integrity of the rights object. Thereto, the CEK might be encrypted together with an RO integrity key, in the following also being referred to as message authentication key MAK, and the RO might further comprise integrity data to be validated by the MAK.

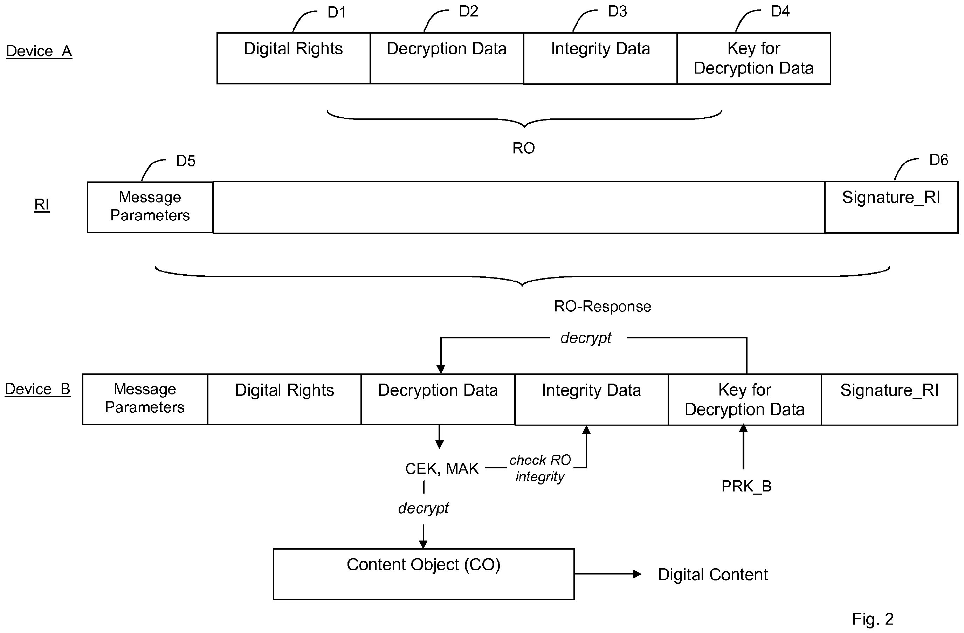

In the following, an exemplary structure of a RO and a RO-response enabling both a protection of the digital content as well as a protection of the RO (against unauthorized modifications) is shown in **Fig. 2****.**

The RO being generated by the sending user device (Device_A) by way of example comprises digital rights parameters D1, decryption data D2, integrity data D3 and a key associated to the decryption data D4, in the following being referred to as CEK encryption key D4. The digital rights parameters might be indicative of one or a plurality of permissions with respect to using the CO. The decryption data D2 comprises a concatenation of the CEK and the MAK being encrypted by means of a CEK/MAK encryption key. The integrity data D3 (e.g. realized as check sum of the rights parameters D1) is used for verifying the integrity of the RO by means of the MAK. The CEK encryption key D4 for decrypting the concatenated CEK/MAK is encrypted by the public key of the receiving user device (PUK_B), so that only the receiving user device is able to retrieve the CEK encryption key D4 and thus to decrypt the CO.

After having received and validated the RO from the sending user device, the RI generates the RO-response. The RO-response comprises the RO, the RI signature D6 and by way of example further message parameters D5, e.g. a unique ID of the sending user device and the RO-response itself. This RO-response is sent to the receiving user device (Device_B), e.g. in response to a request not depicted here.

The receiving user device uses its private key PRK_B to decrypt the CEK encryption key D4. The CEK encryption key D4 is then used to decrypt and retrieve the CEK and the MAK. The CEK is used to decrypt the content from the CO and the MAK is used to check the integrity of the RO.

In an embodiment, to be able to disseminating content to other recipient devices, a registration of the first device 14 with the RI 12 is performed so that the RI accepts ROs from that device. Such sending device registration might be provided as a precondition that the RI accepts a rights object RO from that device. This step of registration may be done in advance (e.g. once or each at the beginning of a subscription time period).

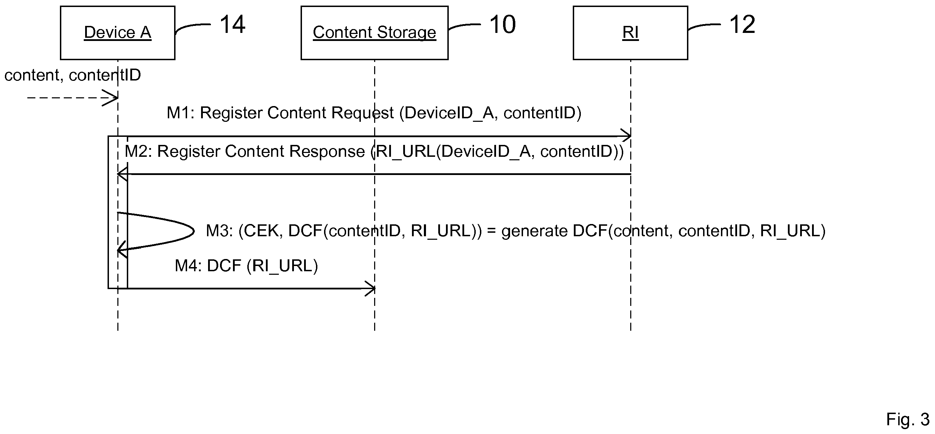

Embodiments of the above-described method will be described in more details by means of following Fig. 3 - Fig. 6. For descriptive purposes these embodiments are based on the above-cited OMA DRM specifications and are especially based on the ROAP as described in OMA DRM 2. It is well understood that the invention will work with any other suitable protocol.

It may be assumed that the sending device 14 keeps an unprotected digital content, to be distributed to further devices, e.g. to the second device 16. The content may have been generated by the device itself e.g. using an integrated camera or by any other device associated to the sending device 14 or might have been received previously. In order to support a super-distribution, the new digital content of the sending device 14 is registered with the RI 12. Thereto, the RI 12 might initiate a communication with the DRM Sender 141 of the sending device 14. The DRM Sender 141 sends a response comprising an external ID, e.g. its MSIDSN to the RI 12. This can be performed via a web portal using HTTP. Additionally, the sending device 14 may indicate that it wants to be informed about registrations at the RI 12 for content governed by the sending device 14. As a reply to this registration, a (ROAP registration) trigger may be sent to the sending device 14, either directly or push, e.g. via WAP push, in order to initiate a registration. In response thereto, the DRM Sender 141 at the first device 14 registers to the RI 12. The DRM Sender 141 keeps a private key (KeyA) and a corresponding PKI certificate (CertA). CertA may for example be compliant to the well-known X.509 standard. The DRM Sender 141 might register at the RI 12 using standard 4-pass ROAP registration protocol, as described in OMA DRM 2, showing the CertA. If the sending device 14 also comprises a DRM Agent 161, the corresponding private key and DRM Device certificate might be used for this purpose. During registration, the DRM Sender 141 transmits its capabilities to the RI 12. For this purpose, e.g., the extKeyUsage extension of CertA or an entry in the Extensions section of the ROAP Device Hello or ROAP Registration Request may be used.

The following **Fig. 3** depicts an exemplary procedure for content registration and protection comprising messages exchanged between the (content) sending device 14 (Device A), the RI 12 and the content storage 10:
In a first step M1, the sending device 14 sends a register content request comprising a sender identification (DeviceID_A) and some content identification (contentID) to the RI 12.

In a next step M2, the RI 12 returns a unique content identification contentID and a URL of a RO associated with the content (RI_URL), which is dependent on the ID (DeviceID_A) of the first device 14 and the contentID. For example, RI_URL = <RI_Server_URL> / <DeviceA_ID> / <contentID> may be used as RI_URL. Instead of the IDs, hashes might be used to increase privacy.

As an alternative, the contentID might be generated directly at the device, provided the device can guarantee its uniqueness.

In a next step M3, the first device 14 encrypts the content and includes the RI_URL into the generated content object or DCF file. The CEK and the contentID are stored in the device.

In a last step M4, the content object may be sent to an external content storage 10 to be further transmitted to any receiving device (e.g. to the second device 16). Alternatively, the content object may be directly sent to the receiving device.

The above procedure might be realized as an extension to the ROAP protocol specified in OMA DRM 2.

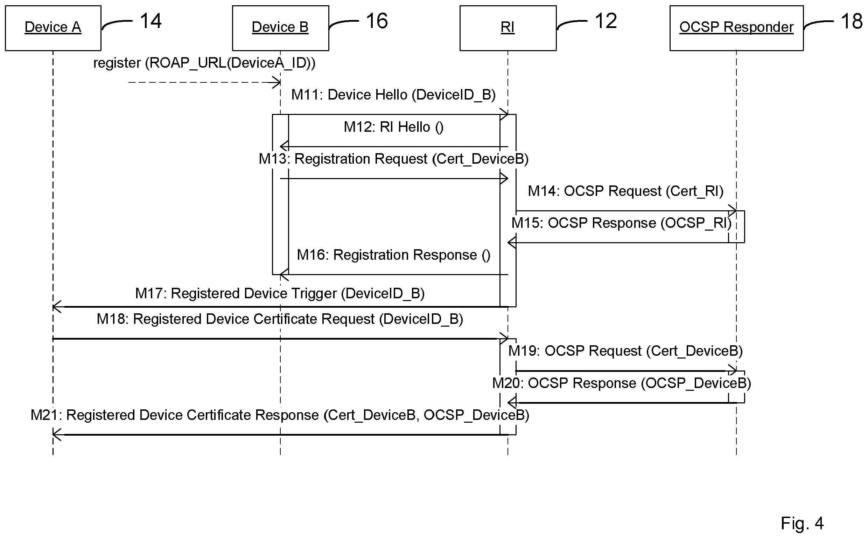

In the following, content registration and protection will be described in more details. Thereto, **Fig. 4** depicts a procedure comprising messages exchanged between the first device 14 (Device A), the second device 16 (Device B), the RI 12 and an OCSP responder 18.

The methods may use standard OMA DRM Right Objects, i.e. ROPayloads as defined in OMA DRM 2. ROPayload do not contain a signature in order to employ a standard DRM agent (as DRM agent 161) as described in the following. Alternatively, if a modification of the DRM agent 161 on the second device 16 is acceptable, the private key of the first device 14 might be used to sign the usage rights. The signature element of the ROPayload might be used to transport this signature.

Confidentiality of the key, also towards the RI, is ensured as the RO contains the CEK encrypted. In order to decrypt CEK, the private key of a recipient or second device 16 is necessary.

Integrity of the ROs, i.e., the granted usage rights, is protected as the ROPayload objectld is embedded in a protectedRO object containing a cryptographic MAC secured by the key KMAC. KMAC is encrypted with the public key of the receiving device 16 and embedded into the ROPayload already by the sending device 14. This MAC guarantees integrity of the ROs, also against potential modifications by the RI 12.

According to OMA DRM 2, every new device needs to register with a rights issuer in order to exchange certificates and to establish an initial trust relationship. In the following it is assumed that the receiving device 16 comprises a standard OMA DRM 2 device agent (DRM agent 161) and that the registration towards the DRM RI will occur using ROAP according to OMA DRM 2, as described in the following steps M11 - M17:
Initially, the receiving device 16 receives a register request [register (ROAP_URL(DeviceA_ID))] e.g. entered manually by the user.

In a step M11, the receiving device 16 sends a initial registration request [Device Hello (DeviceID_B)] to the RI 12. The ID of the receiving user device 16 (DeviceID_B) may be a hash of the public key of the receiving device 16.

In a further next step M12, in response, the RI 12 sends back a response to the initial registration request [RI Hello()] to the receiving device 16.

In a further next step M13, the receiving device 16 sends a registration request comprising the certificate comprising its public key [Cert_DeviceB] to the RI 12.

In a further next step M14, the RI 12 sends an OCSP request comprising its certificate [Cert_RI] to the OCSP Responder 18.

In a further next step M15, the OCSP Responder 18 responds to the OCSP request by sending an OCSP response for the rights issuer certificate Cert_RI comprising a signature over the rights issuer certificate, the OCSP responder certificate and a freshness value (e.g. time stamp or nonce) [OCSP Response (OCSP_RI)] to the RI 12.

In a further next step M16, the RI 12 sends a registration response to the receiving device 16.

In a further next step M17, a notification regarding the registration of the (new) receiving device 16 is forwarded to the sending device 14. To contact the correct sending device 14, the RI 12 may retrieve the identity of this device from the RI_URL. This message can be realized as an extension to the ROAP (ROAP trigger).

In further next steps M18 to M21, the sending device 14 initiates a protocol (that can be regarded as an extended ROAP protocol) in order to query the certificate of the receiving device 16:
Thereto in a step M18, the sending device 14 sends a request to register the ID of the receiving device 16 [Registered Device Certificate Request (DeviceID_B)] to the RI 12.

In a next step M19, the RI 12 sends an OCSP request comprising the certificate of the receiving device 16 [OCSP Request (Cert_DeviceB)] to the OCSP responder 18.

In a further next step M20, in response, the OCSP responder 18 sends an OCSP response for the receiving device certificate comprising a signature over the receiving device certificate, the OCSP responder certificate and a freshness value [OCSP Response (OCSP_DeviceB)] to the RI.

In a further next step M21, the RI 12 sends a response [Registered Device Certificate Response (Cert_DeviceB, OCSP_DeviceB)] to the sending device 14. (The sending device 14 now obtained the receiving device certificate together with a confirmation that the certificate of the receiving device is valid).

According to OMA, a so-called 2-pass RO acquisition protocol is a protocol, by which the receiving device acquires an RO. This protocol includes integrity-protected request and delivery of ROs, and the secure transfer of cryptographic keying material necessary to process the RO. In the following, a extension of the 2-pass ROAP mechanism for user generated content is described in more details.

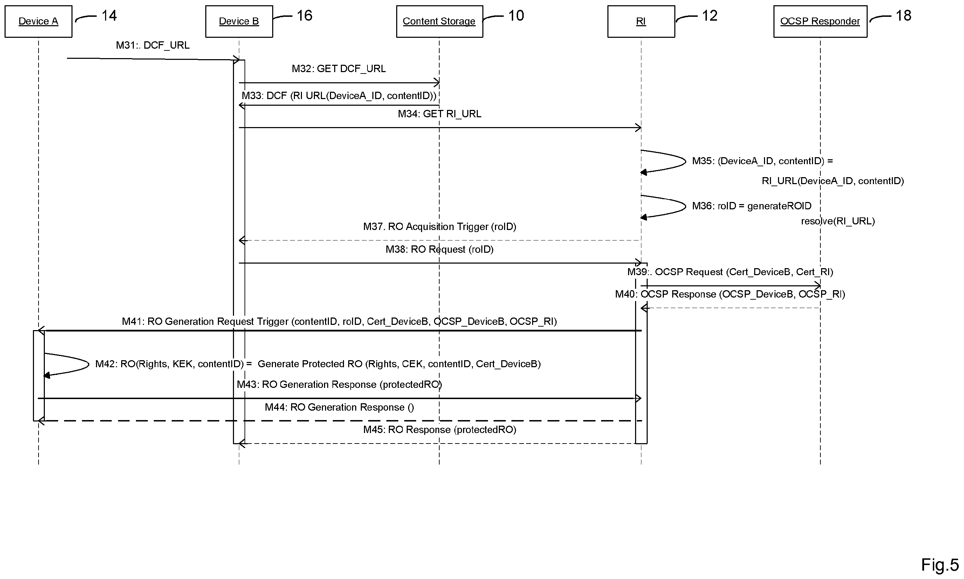

Thereto, **Fig. 5** shows messages M31 - M45 exchanged between the sending device 14, the receiving device 16, the content storage 10, the RI 12 and the OCSP Responder 18.

In steps M31 - M33, a reference to the content object is send to the receiving device 16, e.g. using SMS or MMS and the device downloads the content object or DCF containing the content afterwards:
In a step M31, the receiving device 16 receives the URL of the content object (e.g. by manual input or by means of an SMS, MMS, e-mail etc.).

In a next step M32, the receiving device 16 requests the content object from the content storage 10.

In a further next step M33, the content storage 10 delivers the content object to the receiving device 16. The content object comprises the rights issuer URL and the content ID or information to derive these parameters.

Alternatively, the DCF may be sent directly to the device, e.g. using email, Bluetooth, etc.

Following standardized OMA DRM 2 procedures, the receiving device 16 will send an HTTP GET request to the RI_URL given in the DCF, provided no RO exists for the DCF. The RI 12 responds with a ROAP trigger and, subsequently, the receiving device 16 initiates a ROAP Request. The RI 12 can retrieve the contentID and the ID of the sending device 12 from RI_URL. These information is used as input in order to generate the RO ID. This is described in more details in the following steps M34 to M38:
In a step M34, the receiving device 16 sends a (HTTP get) request [GET RI_URL] to the RI 12.

In a next step M35, the RI 12 determines the IDs of the sending device and the content object from the RI_URL (DeviceA_ID, contentID) = RI_URL(DeviceA_ID, contentID).

In a further next step M36, the RI 12 generates the ID of the RO rolD = generateROID resolve(RI_URL).

In a further next step M37, the RI 12 sends a RO acquisition trigger, comprising rolD, to the receiving device 16.

In a further next step M38, in response, the receiving device 16 sends a RO request (roID) to the RI 12.

In a next step M39, the RI 12 sends an OCSP request comprising the certificate of the receiving device 16 and its own certificate [OCSP Request (Cert_DeviceB, Cert_RI)] to the OCSP responder 18.

In a next step M40, the OCSP responder 18 sends an OCSP response for the receiving device certificate comprising a signature over the receiving device certificate, the OCSP responder certificate (and a freshness value) [OCSP Response (OCSP_DeviceB, OCSP_RI) back to the RI 12.

In a following step M41, the RI 12 sends an request for RO generation to the sending device 14, comprising for example the content ID, the rolD, the certificate of receiving device 16, the OCSP response for Cert_DeviceB, and the OCSP response for the RI [RO Generation Request Trigger(contentID, rolD, Cert_DeviceB, OCSP_DeviceB, OCSP_RI)],. Again, an extended ROAP trigger is used.

In a following step M42, the sending device 14 generates a protected RO for the receiving device 16.

In a following step M43, the sending device 14 sends the protected RO to the RI 12 via extended ROAP [RO Generation Response(protectedRO)].

At this point, the RI has received the protected RO intended for the receiving device 16.

In a following step M44, the RI 12 sends an RO generation response to the sending device 14.

In a last step M45, the RI 12 forwards the RO to the receiving device 16 (in a standard ROAP response) which is signed with RI's private key.

At this point, the receiving device 16 has received the RO that gives access to the CO.

As alternative to the 2-pass mechanism described under Fig. 5, a 1-pass mechanism may be used. Applying the 1-pass protocol might be useful, if the sending device 14 already knows the identity and certificate of the receiving device 16.

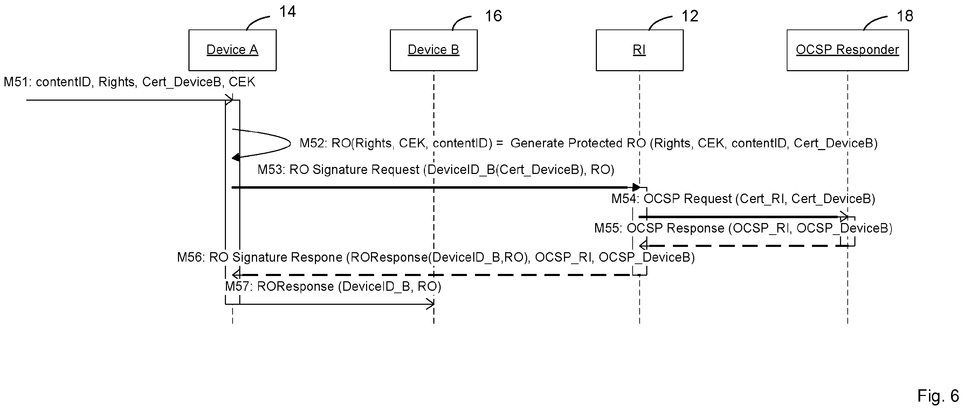

In the following, a 1-pass ROAP mechanism for user generated content is described in more details. Thereto, **Fig. 6** shows steps M51 - M57 to be carried out between the sending device 14, the receiving device 16, the RI 12 and the OCSP Responder 18:
In the context with next step M51, the user of the sending user device might select a digital content, a target device (Device_B) and rights to be granted to the user of the target device, e.g. by means of an appropriate user interface. Subsequently, the sending user device encrypts the digital content by means of the CEK. Further subsequently, the sending user device retrieves the certificate of the receiving user device (Cert_DeviceB) e.g. from a data base, and generates a unique identifier of the content (contentID),
In a further step M52, the sending device 14 generates a (protected) RO for receiving device 16, wherein the rights object comprises the rights, the CEK, and the contentID..

In a further step M53, a signature request is transmitted from the sending device 14 to the RI 12 together with the RO using a protocol (that might be regarded as an extended ROAP as discussed above).

After performing OCSP verification of the validity of Cert_RI and Cert_DeviceB (step M54: sending an OCSP request and step M55: receiving a corresponding OCSP response), the RI 12 sends in step 56 a complete (protected) RO including its signature as response to the signature request (ROResponse message) back to the sending device 14; such message might be sent by means of a response, that might be regarded as an extended ROAP response. The RO is protected using the information from Cert_DeviceB.

The ROResponse message might be a standard OMA DRM 2 object that can be forwarded afterwards to any standard OMA DRM 2 device agent (DRM agent 161) on the receiving device 16, as depicted as last step M57.

It is to be noticed that the sending device 14 may send the ROResponse message to the receiving device 16 together with the DCF. Moreover, the ROResponse message may also be embedded into the DCF.

Alternatively, the ROReponse might be sent from the RI 12 directly to receiving device 16 e.g. using standard 1-pass ROAP.

Thus the one-pass protocol allows delivering the RO to the recipient without a prior certificate exchange; authentication and authorization can be done separately at any time.

The disclosed embodiments allow using any OMA DRM 2 compliant receiving device 16 or more specifically any device comprising a OMA DRM 2 compliant DRM agent 161. The RI 12 behaves towards the DRM agent as a standard OMA DRM 2 RI.

The DRM Signer 121 and the DRM Sender 141 can be realized as extensions to OMA DRM 2. Correspondingly, communication between the DRM Signer 121 and the DRM 141 Sender might communicate via an extension of the ROAP as disclosed above.

## Claims

1. A method of enforcing at a sending device (14) a usage control of an encrypted digital content embedded in a content object, CO, wherein a rights object, RO (D1, D2, D3, D4), associated to the CO is required for using the digital content of the CO at a receiving device (16), the method comprising:
- generating at the sending device (14) an encryption information (D2, D4) for decrypting the encrypted digital content and inserting the decryption information into the RO,
- sending (S2) the RO to a rights management server (12) to be forwarded to the receiving device (16),
- receiving from the rights management server (12) a unique resource locator of the RO, RI-URL, and
- embedding the RI-URL into the CO, so that the receiving device (16) is able to retrieve the RI-URL from the received CO and use the RI-URL for getting the RO,
wherein the digital content of the CO is encrypted by means of a first encryption key, CEK, and wherein the encryption information (D2, D4) comprises the CEK being encrypted by a second encryption key, wherein the second encryption key is associated to a decryption key of the receiving device (16), so that the receiving device (16) is able to retrieve the CEK to decrypt the digital content of the CO.

2. The method of the preceding claim, wherein the second encryption key is a public key of the receiving device (16), and the decryption key associated to said second encryption key is a corresponding private key of the receiving device (16).

3. The method of claim 2, wherein the RO further comprises verification data (D3) indicative of an integrity of the RO or parts of the RO, and wherein the encryption information (D2, D4) further comprises a verification key being encrypted by the second encryption key so that the receiving device (16) is able retrieve the verification key to verify the integrity of the RO.

4. The method of the previous claim, wherein the verification key is being encrypted together with the CEK.

5. The method of claim 1 or any one of the preceding claims, further comprising generating a set of rights parameters (D1) indicative of one or a plurality of digital rights with respect to a usage of the digital content of the CO, and embedding the set of rights parameters (D1) into the RO to be transmitted to the rights management server (12).

6. The method of claim 1 or any one of the preceding claims, further comprising receiving a data set comprising the RO and a signature of the RO by the rights management server (12) and forwarding the data set to the recipient device 16, wherein said signature is indicative of an acceptance of the RO.

7. The method of claim 1 or any one of the preceding claims, further comprising transmitting the CO to a data storage server (10) to be further transmitted to the receiving device (16).

8. The method of claim 1 or any one of the preceding claims, wherein the RO is generated according to the standard "OMA Digital Rights Management V2.0" or "OMA Digital Rights Management V2.1".

9. A method performed at a rights management server of supporting a sending device (14) to enforcing a usage control of an encrypted digital content embedded in a content object, CO, wherein a rights object, RO, associated to the CO is required for using the digital content of the CO at a receiving device (16), the method comprising:
- receiving (S2) from the sending device (14) the RO comprising an encryption information (D2, D4) for decrypting the encrypted digital content of the CO, the RO to be forwarded to the receiving device (16), and
- sending to the sending device (14) a unique resource locator of the RO, RI-URL, to be embedded into the CO, so that the receiving device (16) is able to retrieve the RI-URL from the received CO and use the RI-URL for getting the RO,
- wherein the digital content of the CO is encrypted by means of a first encryption key, CEK, and wherein the encryption information (D2, D4) comprises the CEK being encrypted by a second encryption key, wherein the second encryption key is associated to a decryption key of the receiving device (16).

10. The method of claim 9, further comprising generating a digital signature (D5) and forwarding the digital signature together with the RO.

11. The method of the preceding claim, wherein forwarding the RO comprises comprising generating a data set (D1, D2, D3, D4, D5, D6) comprising the RO and the digital signature (D5) and forwarding the data set to one of: the sending device (14) and the receiving device (16).

12. The method of the preceding claim, wherein the data set comprising the RO and the digital signature is forwarded to the receiving device (16) in response to a request received from the receiving device (16).

13. A device (14) for enforcing a usage control of an encrypted digital content embedded in a content object, CO, wherein a rights object, RO, associated to the CO is required for using the digital content of the CO at a receiving device (16), comprising:
- a digital rights management entity (141) adapted for generating an encryption information (D2, D4) for decrypting the encrypted digital content and inserting the decryption information into the RO, and
- a sender for sending (S2) the RO to a rights management server (12) to be forwarded to the receiving device (16),
- means for receiving from the rights management server (12) a unique resource locator of the RO, RI-URL, and
- means for embedding the RI-URL into the CO, so that the receiving device (16) is able to retrieve the RI-URL from the received CO and use the RI-URL for getting the RO,
- wherein the device is adapted to encrypt the digital content of the CO by means of a first encryption key, CEK, and wherein the encryption information (D2, D4) comprises the CEK being encrypted by a second encryption key, wherein the second encryption key is associated to a decryption key of the receiving device (16), so that the receiving device (16) is able to retrieve the CEK to decrypt the digital content of the CO.

14. A rights management server (12) for supporting a sending device (14) to enforce a usage control of an encrypted digital content embedded in a content object, CO, wherein a rights object, RO, associated to the CO is required for using the digital content of the CO at a receiving device (16), comprising:
- a receiver adapted for receiving (S2) from the sending device (14) a rights object (M41, M53) comprising an encryption information (D2, D4) for decrypting the encrypted digital content of the CO, and
- a transmitter adapted for transmitting the RO to be received by the receiving device (16),
- wherein the server is further adapted for sending to the sending device (14) a unique resource locator of the RO, RI-URL, to be embedded into the CO, so that the receiving device (16) is able to retrieve the RI-URL from the received CO and use the RI-URL for getting the RO,
- wherein the digital content of the CO is encrypted by means of a first encryption key, CEK, and wherein the encryption information (D2, D4) comprises the CEK being encrypted by a second encryption key, wherein the second encryption key is associated to a decryption key of the receiving device (16), so that the receiving device (16) is able to retrieve the CEK to decrypt the digital content of the CO.

15. The server (12) of the preceding claim, further comprising a digital rights management signature entity (121) adapted for validating the received RO and for generating a corresponding signature to be transmitted to the receiving device (16) together with the RO.

## Patentansprüche

1. Verfahren zum Durchsetzen, in einer Sendevorrichtung (14), einer Nutzungssteuerung eines verschlüsselten digitalen Inhalts, der in einem Inhaltsobjekt (Content Object, CO) eingebettet ist, wobei ein Rechteobjekt (Rights Object, RO) (D1, D2, D3, D4), das dem CO zugeordnet ist, zum Verwenden des digitalen Inhalts des CO in einer Empfangsvorrichtung (16) benötigt wird, wobei das Verfahren Folgendes umfasst:
- Generieren, in der Sendevorrichtung (14), von Verschlüsselungsinformationen (D2, D4) zum Verschlüsseln des verschlüsselten digitalen Inhalts und Einfügen der Entschlüsselungsinformationen in das RO,
- Senden (S2) des RO an einen Rechtemanagementserver (12), um an die Empfangsvorrichtung (16) weitergeleitet zu werden,
- Empfangen, von dem Rechtemanagementserver (12), eines eindeutigen Ressourcenlokators des RO (RI-URL), und
- Einbetten des RI-URL in das CO, so dass die Empfangsvorrichtung (16) den RI-URL aus dem empfangenen CO abrufen kann und den RI-URL zum Erlangen des RO verwenden kann,
wobei der digitale Inhalt des CO mittels eines ersten Verschlüsselungsschlüssels (CEK) verschlüsselt wird, und wobei die Verschlüsselungsinformationen (D2, D4) den CEK umfassen, der durch einen zweiten Verschlüsselungsschlüssel verschlüsselt wurde,
wobei der zweite Verschlüsselungsschlüssel einem Entschlüsselungsschlüssel der Empfangsvorrichtung (16) zugeordnet ist, so dass die Empfangsvorrichtung (16) den CEK abrufen kann, um den digitalen Inhalt des CO zu entschlüsseln.

2. Verfahren nach dem vorangehenden Anspruch, wobei der zweite Verschlüsselungsschlüssel ein öffentlicher Schlüssel der Empfangsvorrichtung (16) ist und der Entschlüsselungsschlüssel, der dem zweiten Verschlüsselungsschlüssels zugeordnet ist, ein entsprechender privater Schlüssel der Empfangsvorrichtung (16) ist.

3. Verfahren nach Anspruch 2, wobei das RO des Weiteren Verifizierungsdaten (D3) umfasst, die eine Integrität des RO oder von Teilen des RO anzeigen, und wobei die Verschlüsselungsinformationen (D2, D4) des Weiteren einen Verifizierungsschlüssel umfassen, der durch den zweiten Verschlüsselungsschlüssel verschlüsselt wurde, so dass die Empfangsvorrichtung (16) den Verifizierungsschlüssel abrufen kann, um die Integrität des RO zu verifizieren.

4. Verfahren nach dem vorangehenden Anspruch, wobei der Verifizierungsschlüssel zusammen mit dem CEK verschlüsselt wird.

5. Verfahren nach Anspruch 1 oder nach einem der vorangehenden Ansprüche, das des Weiteren umfasst: Generieren eines Satzes von Rechteparametern (D1), die ein oder mehrere digitale Rechte mit Bezug auf eine Nutzung des digitalen Inhalts des CO angeben, und Einbetten des Satzes von Rechteparametern (D1) in das RO, das an den Rechtemanagementserver (12) zu senden ist.

6. Verfahren nach Anspruch 1 oder nach einem der vorangehenden Ansprüche, das des Weiteren umfasst: Empfangen eines Datensatzes, der das RO und eine Signatur des RO umfasst, durch den Rechtemanagementserver (12), und Weiterleiten des Datensatzes an die Empfängervorrichtung 16, wobei die Signatur eine Akzeptanz des RO angibt.

7. Verfahren nach Anspruch 1 oder nach einem der vorangehenden Ansprüche, das des Weiteren umfasst, das CO an einen Datenspeicherserver (10) zu senden, um weiter zu der Empfangsvorrichtung (16) gesendet zu werden.

8. Verfahren nach Anspruch 1 oder nach einem der vorangehenden Ansprüche, wobei das RO gemäß dem Standard "OMA Digital Rights Management V2.0" oder "OMA Digital Rights Management V2.1" generiert wird.

9. Verfahren, das in einem Rechtemanagementserver ausgeführt wird, zum Unterstützen einer Sendevorrichtung (14) beim Durchsetzen einer Nutzungssteuerung eines verschlüsselten digitalen Inhalts, der in ein Inhaltsobjekt (CO) eingebettet ist, wobei ein Rechteobjekt (RO), das dem CO zugeordnet ist, zum Verwenden des digitalen Inhalts des CO in einer Empfangsvorrichtung (16) benötigt wird, wobei das Verfahren Folgendes umfasst:
- Empfangen (S2), von der Sendevorrichtung (14), des RO, das Verschlüsselungsinformationen (D2, D4) zum Verschlüsseln des verschlüsselten digitalen Inhalts des CO umfasst, wobei das RO an die Empfangsvorrichtung (16) weitergeleitet werden soll, und
- Senden, an die Sendevorrichtung (14), eines eindeutigen Ressourcenlokators des RO (RI-URL), der in das CO eingebettet werden soll, so dass die Empfangsvorrichtung (16) den RI-URL aus dem empfangenen CO abrufen kann, und Verwenden des RI-URL, um das RO zu erlangen,
- wobei der digitale Inhalt des CO mittels eines ersten Verschlüsselungsschlüssels (CEK) verschlüsselt wird und wobei die Verschlüsselungsinformationen (D2, D4) den CEK umfassen, der durch einen zweiten Verschlüsselungsschlüssels verschlüsselt wurde, wobei der zweite Verschlüsselungsschlüssel einem Entschlüsselungsschlüssel der Empfangsvorrichtung (16) zugeordnet ist.

10. Verfahren nach Anspruch 9, das des Weiteren umfasst: Generieren einer digitalen Signatur (D5), und Weiterleiten der digitalen Signatur zusammen mit dem RO.

11. Verfahren nach dem vorangehenden Anspruch, wobei das Weiterleiten des RO umfasst: Generieren eines Datensatzes (D1, D2, D3, D4, D5, D6), der das RO und die digitale Signatur (D5) umfasst, und Weiterleiten des Datensatzes zu der Sendevorrichtung (14) oder zu der Empfangsvorrichtung (16).

12. Verfahren nach dem vorangehenden Anspruch, wobei der Datensatz das RO umfasst, und die digitale Signatur in Reaktion auf eine von der Empfangsvorrichtung (16) empfangene Anforderung an die Empfangsvorrichtung (16) weitergeleitet wird.

13. Vorrichtung (14) zum Durchsetzen einer Nutzungssteuerung eines verschlüsselten digitalen Inhalts, der in ein Inhaltsobjekt (CO) eingebettet ist, wobei ein Rechteobjekt (RO), das dem CO zugeordnet ist, zum Verwenden des digitalen Inhalts des CO in einer Empfangsvorrichtung (16) benötigt wird, und die Folgendes umfasst:
- eine Digitale-Rechte-Management-Entität (141), die dafür ausgelegt ist, Verschlüsselungsinformationen (D2, D4) zum Verschlüsseln des verschlüsselten digitalen Inhalts zu generieren und die Entschlüsselungsinformationen in das RO einzufügen, und
- einen Sender zum Senden (S2) des RO an einen Rechtemanagementserver (12), um an die Empfangsvorrichtung (16) weitergeleitet zu werden,
- ein Mittel zum Empfangen, von dem Rechtemanagementserver (12), eines eindeutigen Ressourcenlokators des RO (RI-URL), und
- ein Mittel zum Einbetten des RI-URL in das CO, so dass die Empfangsvorrichtung (16) den RI-URL aus dem empfangenen CO abrufen kann und den RI-URL zum Erlangen des RO verwenden kann,
- wobei die Vorrichtung dafür ausgelegt ist, den digitalen Inhalt des CO mittels eines ersten Verschlüsselungsschlüssels (CEK) zu verschlüsseln, und wobei die Verschlüsselungsinformationen (D2, D4) den CEK umfassen, der durch einen zweiten Verschlüsselungsschlüssel verschlüsselt wurde, wobei der zweite Verschlüsselungsschlüssel einem Entschlüsselungsschlüssel der Empfangsvorrichtung (16) zugeordnet ist, so dass die Empfangsvorrichtung (16) den CEK abrufen kann, um den digitale Inhalt des CO zu entschlüsseln.

14. Rechtemanagementserver (12) zum Unterstützen einer Sendevorrichtung (14) beim Durchsetzen einer Nutzungssteuerung eines verschlüsselten digitalen Inhalts, der in ein Inhaltsobjekt (CO) eingebettet ist, wobei ein Rechteobjekt (RO), das dem CO zugeordnet ist, zum Verwenden des digitalen Inhalts des CO in einer Empfangsvorrichtung (16) benötigt wird, und der Folgendes umfasst:
- einen Empfänger, der dafür ausgelegt ist, von der Sendevorrichtung (14) ein Rechteobjekt (M41, M53) zu empfangen (S2), das Verschlüsselungsinformationen (D2, D4) zum Verschlüsseln des verschlüsselten digitalen Inhalts des CO umfasst, und
- einen Sender, der dafür ausgelegt ist, das RO zu senden, das durch die Empfangsvorrichtung (16) empfangen werden soll,
- wobei der Server des Weiteren dafür ausgelegt ist, an die Sendevorrichtung (14) einen eindeutigen Ressourcenlokator des RO (RI-URL) zu senden, der in das CO einzubetten ist, so dass die Empfangsvorrichtung (16) den RI-URL aus dem empfangene CO abrufen kann und den RI-URL zum Erlangen des RO verwenden kann,
- wobei der digitale Inhalt des CO mittels eines ersten Verschlüsselungsschlüssels (CEK) verschlüsselt wird und wobei die Verschlüsselungsinformationen (D2, D4) den CEK umfassen, der durch einen zweiten Verschlüsselungsschlüssel verschlüsselt wurde, wobei der zweite Verschlüsselungsschlüssel einem Entschlüsselungsschlüssel der Empfangsvorrichtung (16) zugeordnet ist, so dass die Empfangsvorrichtung (16) den CEK abrufen kann, um den digitale Inhalt des CO zu entschlüsseln.

15. Server (12) nach dem vorangehenden Anspruch, der des Weiteren eine Digitale-Rechte-Management-Signaturentität (121) umfasst, die dafür ausgelegt ist, das empfangene RO zu validieren und eine entsprechende Signatur zu generieren, die zusammen mit dem RO an die Empfangsvorrichtung (16) gesendet werden soll.

## Revendications

1. Procédé d'application, à un dispositif d'envoi (14), d'un contrôle d'utilisation d'un contenu numérique crypté incorporé dans un objet de contenu, CO, dans lequel un objet de droits, RO, (D1, D2, D3, D4) associé au CO est exigé pour l'utilisation du contenu numérique du CO à un dispositif de réception (16), le procédé comprenant :
- la génération, au dispositif d'envoi (14), d'informations de cryptage (D2, D4) pour décrypter le contenu numérique crypté et l'insertion des informations de décryptage dans le RO,
- l'envoi (S2) du RO à un serveur de gestion de droits (12) pour son transfert au dispositif de réception (16),
- la réception, en provenance du serveur de gestion de droits (12), d'un localisateur de ressource unique du RO, RI-URL, et
- l'incorporation du RI-URL dans le CO, de sorte que le dispositif de réception (16) soit capable de récupérer le RI-URL à partir du CO reçu et d'utiliser le RI-URL pour l'obtention du RO,
dans lequel le contenu numérique du CO est crypté au moyen d'une première clé de cryptage, CEK, et dans lequel les informations de cryptage (D2, D4) comprennent la CEK qui est cryptée par une deuxième clé de cryptage,
dans lequel la deuxième clé de cryptage est associée à une clé de décryptage du dispositif de réception (16), de sorte que le dispositif de réception (16) soit capable de récupérer la CEK pour décrypter le contenu numérique du CO.

2. Procédé selon la revendication précédente, dans lequel la deuxième clé de cryptage est une clé publique du dispositif de réception (16), et la clé de décryptage associée à ladite deuxième clé de cryptage est une clé privée correspondante du dispositif de réception (16).

3. Procédé selon la revendication 2, dans lequel le RO comprend en outre des données de vérification (D3) indicatives d'une intégrité du RO ou de parties du RO, et dans lequel les informations de cryptage (D2, D4) comprennent en outre une clé de vérification qui est cryptée par la deuxième clé de cryptage de sorte que le dispositif de réception (16) soit capable de récupérer la clé de vérification pour vérifier l'intégrité du RO.

4. Procédé selon la revendication précédente, dans lequel la clé de vérification est cryptée solidairement avec la CEK.

5. Procédé selon la revendication 1 ou l'une quelconque des revendications précédentes, comprenant en outre la génération d'un ensemble de paramètres de droits (D1) indicatifs d'un ou plusieurs droits numériques en ce qui concerne une utilisation du contenu numérique du CO, et l'incorporation de l'ensemble de paramètres de droits (D1) dans le RO à transmettre au serveur de gestion de droits (12).

6. Procédé selon la revendication 1 ou l'une quelconque des revendications précédentes, comprenant en outre la réception d'un ensemble de données comprenant le RO et une signature du RO par le serveur de gestion de droits (12) et le transfert de l'ensemble de données au dispositif de réception (16), dans lequel ladite signature est indicative d'une acceptation du RO.

7. Procédé selon la revendication 1 ou l'une quelconque des revendications précédentes, comprenant en outre la transmission du CO à un serveur de mémorisation de données (10) pour être en outre transmis au dispositif de réception (16).

8. Procédé selon la revendication 1 ou l'une quelconque des revendications précédentes, dans lequel le RO est généré selon la norme « OMA Digital Rights Management V2.0 » ou « OMA Digital Rights Management V2.1 ».

9. Procédé, effectué à un serveur de gestion de droits, destiné à prendre en charge l'application, à un dispositif d'envoi (14), d'un contrôle d'utilisation d'un contenu numérique crypté incorporé dans un objet de contenu, CO, dans lequel un objet de droits, RO, associé au CO est exigé pour l'utilisation du contenu numérique du CO à un dispositif de réception (16), le procédé comprenant :
- la réception (S2), en provenance du dispositif d'envoi (14), du RO contenant des informations de cryptage (D2, D4) pour décrypter le contenu numérique crypté du CO, le RO devant être transféré au dispositif de réception (16), et
- l'envoi, à destination du dispositif d'envoi (14), d'un localisateur de ressource unique du RO, RI-URL, à incorporer dans le CO, de sorte que le dispositif de réception (16) soit capable de récupérer le RI-URL à partir du CO reçu et d'utiliser le RI-URL pour l'obtention du RO,
- dans lequel le contenu numérique du CO est crypté au moyen d'une première clé de cryptage, CEK, et dans lequel les informations de cryptage (D2, D4) comprennent la CEK qui est cryptée par une deuxième clé de cryptage, dans lequel la deuxième clé de cryptage est associée à une clé de décryptage du dispositif de réception (16).

10. Procédé selon la revendication 9, comprenant en outre la génération d'une signature numérique (D5) et le transfert de la signature numérique solidairement avec le RO.

11. Procédé selon la revendication précédente, dans lequel le transfert du RO comprend la génération d'un ensemble de données (D1, D2, D3, D4, D5, D6) comprenant le RO et la signature numérique (D5) et le transfert de l'ensemble de données à l'un de : le dispositif d'envoi (14) et le dispositif de réception (16).

12. Procédé selon la revendication précédente, dans lequel l'ensemble de données comprenant le RO et la signature numérique est transféré au dispositif de réception (16) en réponse à une demande reçue en provenance du dispositif de réception (16).

13. Dispositif (14) destiné à l'application d'un contrôle d'utilisation d'un contenu numérique crypté incorporé dans un objet de contenu, CO, dans lequel un objet de droits, RO, associé au CO est exigé pour l'utilisation du contenu numérique du CO à un dispositif de réception (16), comprenant :
- une entité de gestion de droits numériques (141) apte à effectuer la génération d'informations de cryptage (D2, D4) pour décrypter le contenu numérique crypté et l'insertion des informations de décryptage dans le RO, et
- un émetteur pour effectuer l'envoi (S2) du RO à un serveur de gestion de droits (12) pour son transfert au dispositif de réception (16),
- des moyens pour effectuer la réception, en provenance du serveur de gestion de droits (12), d'un localisateur de ressource unique du RO, RI-URL, et
- des moyens pour effectuer l'incorporation du RI-URL dans le CO, de sorte que le dispositif de réception (16) soit capable de récupérer le RI-URL à partir du CO reçu et d'utiliser le RI-URL pour l'obtention du RO,
- dans lequel le dispositif est apte à effectuer le cryptage du contenu numérique du CO au moyen d'une première clé de cryptage, CEK, et dans lequel les informations de cryptage (D2, D4) comprennent la CEK qui est cryptée par une deuxième clé de cryptage, dans lequel la deuxième clé de cryptage est associée à une clé de décryptage du dispositif de réception (16), de sorte que le dispositif de réception (16) soit capable de récupérer la CEK pour décrypter le contenu numérique du CO.

14. Serveur de gestion de droits (12) destiné à prendre en charge l'application, à un dispositif d'envoi (14), d'un contrôle d'utilisation d'un contenu numérique crypté incorporé dans un objet de contenu, CO, dans lequel un objet de droits, RO, associé au CO est exigé pour l'utilisation du contenu numérique du CO à un dispositif de réception (16), comprenant :
- un récepteur apte à effectuer la réception (S2), en provenance du dispositif d'envoi (14), d'un objet de droits (M41, M53) contenant des informations de cryptage (D2, D4) pour décrypter le contenu numérique crypté du CO, et
- un émetteur apte à effectuer la transmission du RO à recevoir par le dispositif de réception (16),
- dans lequel le serveur est en outre apte à effectuer l'envoi, à destination du dispositif d'envoi (14), d'un localisateur de ressource unique du RO, RI-URL, à incorporer dans le CO, de sorte que le dispositif de réception (16) soit capable de récupérer le RI-URL à partir du CO reçu et d'utiliser le RI-URL pour l'obtention du RO,
- dans lequel le contenu numérique du CO est crypté au moyen d'une première clé de cryptage, CEK, et dans lequel les informations de cryptage (D2, D4) comprennent la CEK qui est cryptée par une deuxième clé de cryptage, dans lequel la deuxième clé de cryptage est associée à une clé de décryptage du dispositif de réception (16), de sorte que le dispositif de réception (16) soit capable d'effectuer la récupération de la CEK pour décrypter le contenu numérique du CO.

15. Serveur (12) selon la revendication précédente, comprenant en outre une entité de signature de gestion de droits numériques (121) apte à effectuer la validation du RO reçu et la génération d'une signature correspondante à transmettre au dispositif de réception (16) solidairement avec le RO.
